(19) Europäisches Patentamt
European Patent Office
Office européen des brevets

(11) **EP 2 894 125 A1**

(12) **EUROPEAN PATENT APPLICATION**

(43) Date of publication:
**15.07.2015 Bulletin 2015/29**

(51) Int Cl.:
***C01B 13/02*** (2006.01)   ***C25B 1/04*** (2006.01)
***C25B 11/04*** (2006.01)

(21) Application number: **14192940.6**

(22) Date of filing: **13.11.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **10.01.2014 JP 2014002892**

(71) Applicant: **Panasonic Intellectual Property Management Co., Ltd.**
**Osaka-shi, Osaka 540-6207 (JP)**

(72) Inventors:
• **Toyoda, Kenji**
**Osaka-shi, Osaka 540-6207 (JP)**
• **Taniguchi, Reiko**
**Osaka-shi, Osaka 540-6207 (JP)**
• **Miyata, Nobuhiro**
**Osaka-shi, Osaka 540-6207 (JP)**

(74) Representative: **Grünecker Patent- und Rechtsanwälte**
**PartG mbB**
**Leopoldstraße 4**
**80802 München (DE)**

(54) **Method for generating oxygen and water electrolysis device**

(57)   The present invention provides a method for efficiently generating oxygen by electrolyzing water using a copper delafossite compound as an anode. First, in the present invention, a water electrolysis device is prepared. The water electrolysis device comprises a container, a power supply, an anode, a cathode; and an aqueous electrolytic solution. The anode and the cathode are in contact with the aqueous electrolytic solution. The anode has a copper cobalt delafossite compound represented by a chemical formula $CuCoO_2$. The copper cobalt delafossite compound is in contact with the aqueous electrolytic solution. Then, an electric potential difference is applied between the cathode and the anode using the power supply to generate oxygen on the anode due to electrolysis of water which occurs on the copper cobalt delafossite compound.

FIG. 1

**Description**

BACKGROUND

1. Field of the Invention

The present invention relates to a method for generating oxygen and a water electrolysis device.

2. Description of the Related Art

Great Britain Patent Publication No. 1400948B discloses a method for generating chlorine by electrolyzing sodium chloride using an anode having a delafossite compound represented by a chemical formula $ABO_2$ (where A represents platinum, palladium, silver, or cobalt, and B represents chromium, iron, cobalt, rhodium, aluminum, gadolinium, scandium, indium, thallium, lead, ruthenium, or lanthanide) on the surface thereof. However, Great Britain Patent Publication No. 1400948B is silent about a method for generating oxygen.

SUMMARY

The present invention provides a method for generating oxygen, the method comprising:

(a) preparing a water electrolysis device comprising:

a container;
a power supply;
an anode;
a cathode, and
an electrolyte aqueous solution; wherein
the anode and the cathode are in contact with the electrolyte aqueous solution,
the anode includes a copper cobalt delafossite compound represented by a chemical formula $CuCoO_2$, and
the copper cobalt delafossite compound is in contact with the electrolyte aqueous solution, and

(b) applying an electric potential difference between the cathode and the anode using the power supply to generate oxygen on the anode due to electrolysis of water which occurs on the copper cobalt delafossite compound.

The present invention provides a method for efficiently generating oxygen by electrolyzing water using a copper delafossite compound as an anode. The present invention also provides a water electrolysis device suitable for the method.

BRIEF DESCRIPTION OF THE DRAWINGS

FIG. 1 shows a schematic view of a water electrolysis device 100 according to a first embodiment.
FIG. 2 shows a schematic view of a thin-film electrolysis cell.
FIG. 3 is a graph showing a result of an X-ray diffraction measurement in the example 1.
FIG. 4 is a graph showing an electric current - voltage property measured in the example 1, the comparative examples 1 - 5, and the reference examples 1 - 2.
FIG. 5 is a graph showing an electric current - voltage property in the example 1 before and after sweeping of an electric potential was repeated 1,000 times.
FIG. 6A is a scanning electron microscope image of an anode substrate according to the comparative example 4 before a sweeping of an electric potential was started.
FIG. 6B is a scanning electron microscope image of an anode substrate according to the comparative example 5 after the sweeping of the electric potential was repeated 10 times.
FIG. 7 is a graph showing an electric current - voltage property in the comparative example 5 before and after the sweeping of the electric potential was repeated 10 times.

DETAILED DESCRIPTION OF THE EMBODIMENTS

The embodiments of the present invention will be described below with reference to the drawings.

The theoretical voltage required for electrolysis of water is 1.23 volts. However, in practice, a voltage more than 1.23 volts is necessary for electrolysis of water due to overvoltage in the electrode. The smaller the overvoltage is, the more efficiently the electrolysis of water proceeds. The term "overvoltage" used in the instant specification means a voltage difference from a theoretical voltage necessary for generating oxygen on an anode by electrolyzing water. For example, when a voltage of 2.0 volts is required to generate oxygen by electrolyzing water using an anode formed of metal M, the metal M has an overvoltage of 0.77 volts (= 2.0 volts - 1.23 volts).

As demonstrated in the comparative examples which will be described later, the present inventors generated oxygen by electrolyzing water using various copper delafossite compounds. As a result, almost all of the copper delafossite compounds were not suitable for electrolysis of water due to the large overvoltage thereof.

However, the present inventors found a copper delafossite compound suitable for generating oxygen by electrolyzing water from among various copper delafossite compounds to achieve the present invention. An object of the present invention is to provide a method for efficiently generating oxygen by electrolyzing water using a copper delafossite compound as an anode. Another object of the present invention is to provide a water electrolysis device suitable for the method.

(First embodiment)

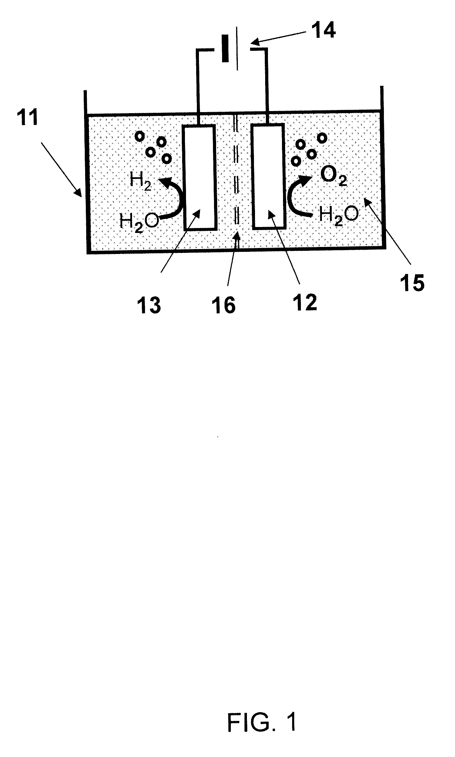

FIG. 1 shows a schematic view of a water electrolysis device 100 according to a first embodiment. The water electrolysis device 100 according to the first embodiment comprises a container 11, an anode 12, a cathode 13, and a power supply 14.

(Container 11)

An electrolyte aqueous solution 15 is stored in the container 11. An example of the electrolyte aqueous solution 15 is an alkaline aqueous solution such as potassium hydroxide or sodium hydroxide. Water is electrolyzed using the alkaline aqueous solution to improve the efficiency of the oxygen generation and to decrease an electric power necessary for the electrolysis.

Another example of the electrolyte included in the electrolyte aqueous solution 15 is sulfuric acid, nitric acid, or perchloric acid. More specifically, an example of a cation of the electrolyte included in the electrolyte aqueous solution 15 is a proton, an alkali metal ion, or an alkaline earth metal ion. An example of an anion of the electrolyte included in the electrolyte aqueous solution 15 is a hydroxide ion represented by the chemical formula $OH^-$, a sulfate ion represented by the chemical formula $SO_4^{2-}$, a nitrate ion represented by the chemical formula $NO_3^-$, or a perchlorate ion represented by the chemical formula $ClO_4^-$. A halide ion represented by the chemical formula $F^-$, $Cl^-$, $Br^-$ or $I^-$ is excluded from the anion of the electrolyte included in the electrolyte aqueous solution 15. In case where the electrolyte aqueous solution 15 contains halide ions, not oxygen but a halogen is generated on the anode 12. An example of the electrolyte included in the electrolyte aqueous solution 15 is a salt composed of such a cation and such an anion. For example, still another example of the electrolyte included in the electrolyte aqueous solution 15 is sodium sulfate, sodium nitrate, or potassium perchlorate.

(Anode 12)

The anode 12 and the cathode 13 are located in the container 11 in such a manner that the anode 12 and the cathode 13 are in contact with the electrolyte aqueous solution 15. The anode 12 and the cathode 13 are electrically connected with the power supply 14 which will be described later. Oxygen is generated on the anode 12. Hydrogen is generated on the cathode 13.

The anode 12 has a copper cobalt delafossite compound. Desirably, the anode 12 has the copper cobalt delafossite compound on the surface thereof so that oxygen is generated on the surface of the copper cobalt delafossite compound included in the anode 12. The copper cobalt delafossite compound is represented by the chemical formula $CuCoO_2$. In other words, the copper cobalt delafossite compound means an oxide having a delafossite compound structure in which an A site is copper and a B site is cobalt.

A method for synthesizing the copper cobalt delafossite compound is not limited. An example of the method for synthesizing the copper cobalt delafossite compound is a hydrothermal synthesis method or a sputtering method.

The anode 12 may be formed of a conductive substrate supporting the copper cobalt delafossite compound. The method for supporting the copper cobalt delafossite compound is not limited. For example, a slurry containing the synthesized copper cobalt delafossite compound is prepared, and then the slurry is applied to the conductive substrate to support the copper cobalt delafossite compound on the conductive substrate. The slurry may contain conductive carbon particles, tin oxide, an additive for improving dispersibility, and/or a material for preventing bubbles generated during the electrolysis from being aggregated. These do not cause deterioration of a catalyst effect of the copper cobalt delafossite compound.

The conductive substrate may have various kinds of shapes such as a plate, a rod, or a mesh. It is desirable that the material of the conductive substrate is a material capable of maintaining its conductivity even if the conductive substrate is exposed to an oxidation atmosphere. An example of the materials of the conductive substrate is valve metal or carbon. The valve metal means a metal having a surface on which a passivation film is formed when the surface is exposed to an acid. An example of the valve metal is titanium, aluminum, chromium, or an alloy thereof.

The anode 12 does not have to comprise the conductive substrate. Such an anode 12 may be provided by pressing or sintering particles of the copper cobalt delafossite compound. Such an anode 12 may contain a conductive carbon material for improving its conductivity, a flux material for raising the adhesivity between the particles and/or a material for preventing the bubbles generated during the electrolysis from being aggregated.

The anode 12 is in contact with the electrolyte aqueous solution 15. Particularly, the copper cobalt delafossite compound included in the anode 12 is in contact with the electrolyte aqueous solution 15. Only a part of the anode 12 may be in contact with the electrolyte aqueous solution 15, as far as the copper cobalt delafossite compound is in contact with the electrolyte aqueous solution 15.

(Cathode 13)

The cathode 13 is formed of a conductive substance. Particularly, the surface of the cathode 13 is formed of a conductive substance. An example of the suitable conductive substance is platinum or a nickel compound, both of which have a low overvoltage for generating hydrogen. The material of the conductive substance is not limited, unless the conductive substance is decomposed in the electrolyte aqueous solution 15.

The cathode 13 is in contact with the electrolyte aqueous solution 15. Particularly, the conductive substance included in the cathode 13 is in contact with the electrolyte aqueous solution 15. Only a part of the cathode 13 may be in contact with the electrolyte aqueous solution 15, as far as the conductive substance is in contact with the electrolyte aqueous solution 15.

(Power supply 14)

The power supply 14 is used to apply a predetermined electric potential difference between the anode 12 and the cathode 13. The predetermined electric potential difference is applied between the anode 12 and the cathode 13 using the power supply 14 to electrolyze water contained in the electrolyte aqueous solution 15. It is desirable to apply an electric potential difference of not less than 1.6 volts and not more than 4.0 volts. An example of the power supply 14 is a potentiostat or a battery.

(Diaphragm 16)

The water electrolysis device 100 has a diaphragm 16 between the anode 12 and the cathode 13. The diaphragm 16 divides the inside of the container 11 into a first chamber where the anode 12 is located and a second chamber where the cathode 13 is located.

An example of the diaphragm 16 is a porous ceramics substrate such as an unglazed plate, a porous polymer membrane such as a polypropylene film, or an ion-exchange membrane such as Nafion (registered trade mark).

The diaphragm 16 is provided such that oxygen generated on the anode 12 is not mixed with hydrogen generated on the cathode 13. No problem about the electrolysis of water occurs in the absence of the diaphragm 16; however, oxygen generated on the anode 12 may transfer to the cathode 13. Oxygen which has been transferred to the cathode 13 is turned into water. As a result, the efficiency of the oxygen generation is decreased. In order to control such a reverse reaction, it is desirable to provide the water electrolysis device 100 with the diaphragm 16.

In the water electrolysis device 100 shown in FIG. 1, the anode 12, the diaphragm 16, and the cathode 13 are disposed at intervals. However, the water electrolysis device 100 may be composed of an integrated electrolysis cell in which the anode 12 and the cathode 13 adhere on the front and back surfaces of the diaphragm 16, respectively.

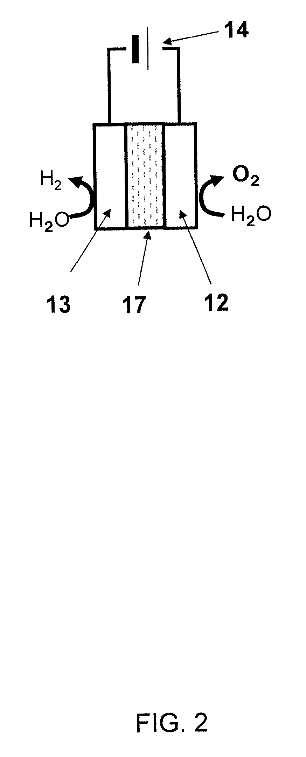

FIG. 2 shows a thin-film electrolysis cell which is another example of the water electrolysis device. The thin-film electrolysis cell shown in FIG. 2 comprises an electrolyte film 17, the anode 12 formed on the front surface of the electrolyte film 17, and the cathode 13 formed on the back surface of the electrolyte film 17. The thin-film electrolysis cell comprises the electrolyte film 17 instead of the container 11 of the water electrolysis device 100. An example of the electrolyte film 17 is an ion-exchange membrane or a ceramic solid electrolyte film. An example of the ion-exchange membrane is a cation exchange membrane such as Nafion (registered trade mark) or Selemion (registered trade mark), or an anion exchange membrane (available from Tokuyama Corporation, for example). An example of the ceramic solid electrolyte film is a zirconia-based ceramic film of yttria-stabilized zirconia (hereinafter, referred to as "YSZ") or scandia-stabilized zirconia (hereinafter, referred to as "ScSZ"). The thin-film electrolysis cell comprising the electrolyte film 17 formed of the ion-exchange membrane is a polymer electrolyte membrane (hereinafter, referred to as "PEM") electrolysis cell. The electrolysis cell comprising the electrolyte film 17 formed of the ceramic solid electrolyte is a solid electrolyte electrolysis cell. The solid electrolyte electrolysis cell is also a high-temperature steam electrolysis cell.

EXAMPLES

The following examples describe the present invention in more detail. The present inventors performed the following experiments to clarify the relationship between the material of the anode 12 used for the water electrolysis device 100 and the voltage required to generate oxygen on the anode 12.

(Example 1)

(Preparation of the anode 12)

The anode 12 according to the example 1 was made by supporting a copper cobalt delafossite compound on a conductive carbon substrate.

First, the copper cobalt delafossite compound was prepared by a hydrothermal synthesis method.

Particularly, cobalt hydroxide represented by the chemical formula $Co(OH)_2$ (available from Wako Pure Chemical Industries, Ltd.) was headed under an oxygen atmosphere at a temperature of 120 Celsius degrees for twenty-four hours to give cobalt oxyhydroxide represented by the chemical formula CoOOH. Cobalt oxyhydroxide represented by the chemical formula CoOOH (0.25 grams) and copper(I) oxide represented by the chemical formula $Cu_2O$ (available from Wako Pure Chemical Industries, Ltd., 0.39 grams) were mixed with a sodium hydroxide aqueous solution (40 milliliters) having a concentration of 2 mol / liter to give a mixture. The mixture was poured in a Teflon vessel having a volume of 100 milliliters. Then, the mixture was heated under a temperature of 210 Celsius degrees for sixty hours. In this way, a copper cobalt delafossite compound was obtained.

Then, the copper cobalt delafossite compound was washed using water for several times. A copper cobalt delafossite solid was extracted using a suction filtration device. The solid was dried for 15 hours in a furnace in which a temperature of 80 Celsius degrees was maintained. Finally, the dried copper cobalt delafossite solid was ground in an agate mortar. In this way, particles of the copper cobalt delafossite compound were obtained.

The obtained particles of the copper cobalt delafossite compound were subjected to X-ray diffraction using an X-ray diffraction device (available from PANalytical, trade name: X'Pert PRO MPD, Target: Cu, Acceleration voltage: 45 kV).

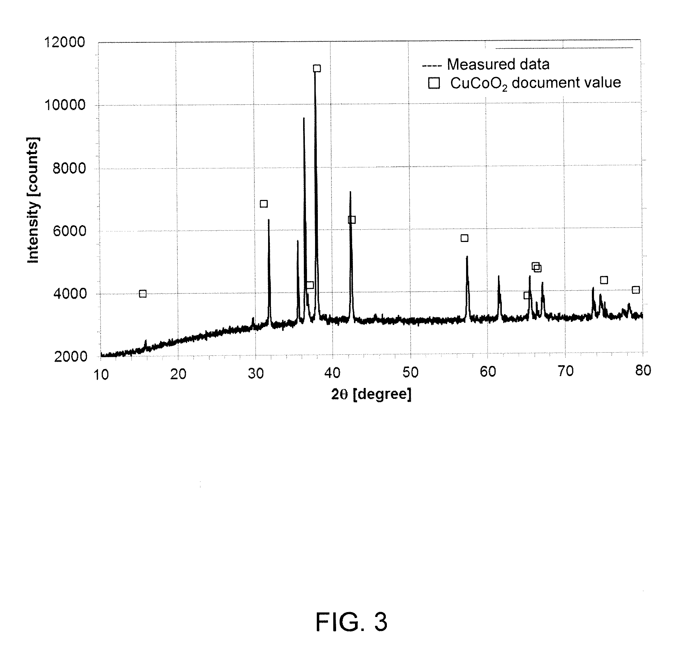

FIG. 3 shows a result of the X-ray diffraction measurement. The diffraction angle and relative intensity of the peak shown in FIG. 3 were in good accord with the diffraction angle and relative intensity of the peak calculated from the lattice constant of the copper cobalt delafossite compound taught in Acta Crystallographica vol.9, page 200 (1956) For this reason, the obtained particles were identified as the copper cobalt delafossite compound. The particles of the copper cobalt delafossite compound each contained approximately 27% of $Cu_2O$ as impurities. However, the $Cu_2O$ impurities did not have an influence on the catalytic performance of the copper cobalt delafossite compound.

The particles of the copper cobalt delafossite compound (46 milligrams) were dispersed in pure water (2 milliliters) to prepare a slurry.

Ultrasonic was applied in acetone to a high density percolation graphite (hereinafter, referred to as "HPG substrate", available form Toyo Tanso Co., Ltd., trade name: HPG-59) having an effective reaction area of 0.28 square centimeters to wash the HPG substrate. Then, ultrasonic was applied in ethanol to the HPG substrate to wash the HPG substrate again.

The slurry (40 microliters) was dropped on the HPG substrate. Then, the HPG substrate was dried under a temperature of 80 degrees Celsius for 15 minutes. A Nafion dispersion liquid having a concentration of 5 percent (available form Sigma Aldrich) was diluted four times using ethanol to prepare a Nafion dispersion liquid having a concentration of 5 percent. Then, the Nafion dispersion liquid (10 microliters) was dropped on the HPG substrate. Finally, the HPG substrate was dried under a temperature of 80 degrees Celsius for 10 minutes. In this way, the anode containing the copper cobalt delafossite compound was obtained.

(Evaluation of oxygen generation property)

The obtained anode substrate was attached as a working electrode to a rotating disk electrode attachment (available from Nikko Keisoku) using a cylindrical cap.

Then, a reversible hydrogen electrode (hereinafter, referred to as "RHE") was used as a reference electrode. A platinum electrode was used as a counter electrode. A potassium hydroxide aqueous solution having a concentration of 1 mol/L was used as an electrolyte solution. An electric potential was swept using a potentiostat (available from ALS Co., Ltd., trade name: ALS-760C) to measure an electric current - voltage property.

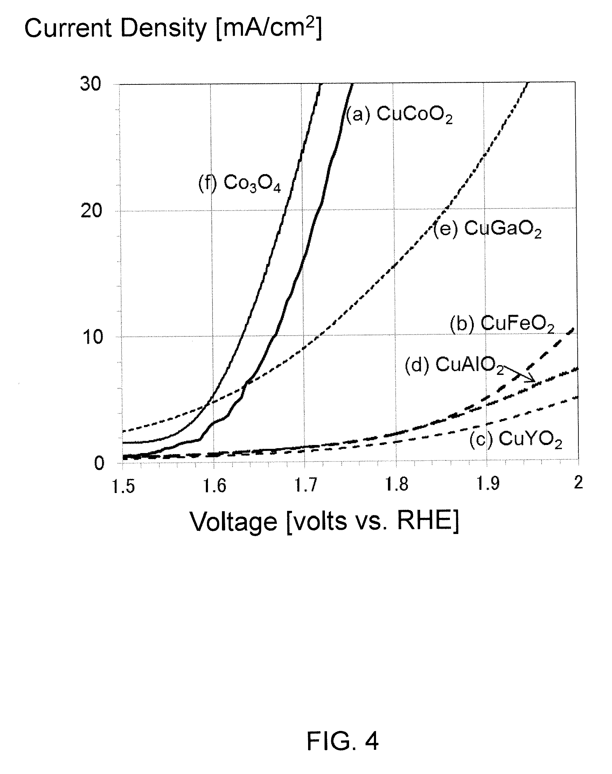

The curve (a) in FIG. 4 is the electric current - voltage property according to the example 1 at a rotating speed of 2000 rpm. The overvoltage was defined by the following mathematical formula (III):

$$\text{Overvoltage} = \text{Electric Potential Difference EPD1 (volt vs. RHE)} - 1.23$$
$$\text{(volt vs. RHE)} \quad \text{(III)}$$

where the Electric Potential Difference EPD1 represents an electric potential difference between the reference electrode and the working electrode at the moment when an electric current of 5 mA/cm$^2$ flows between the counter electrode and the working electrode.

The efficiency of oxygen generation is increased with a decrease in the overvoltage.

As is clear from FIG. 4, the anode according to the example 1 had an electric potential difference EPD1 of 1.63 volts. Therefore, the anode according to the example 1 had an overvoltage of 0.40 volts.

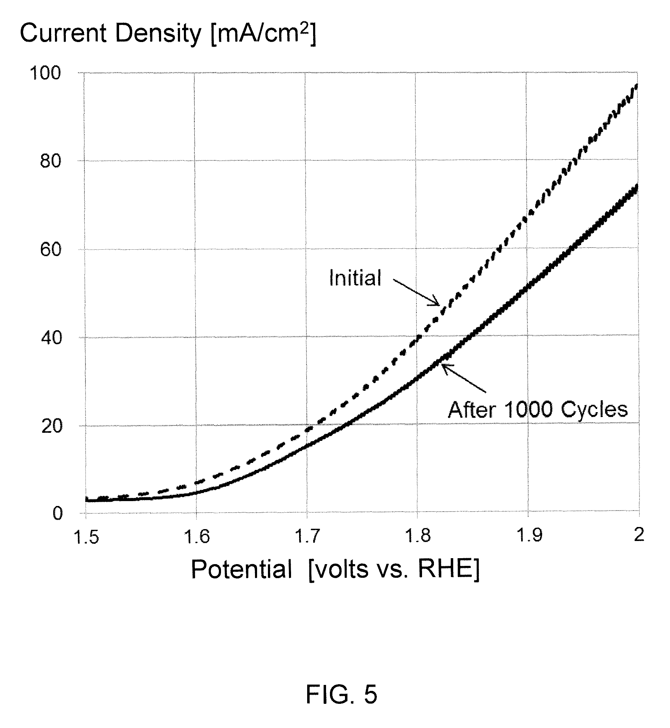

Sweeping of the electric potential was repeated 1,000 times using the potentiostat. FIG. 5 is a graph showing an electric current - voltage property in the example 1 before and after the sweeping of the electric potential was repeated 1,000 times. As is understood from FIG. 5, the anode substrate was not deteriorated so much.

(Comparative example 1)

A copper manganese delafossite compound represented by the chemical formula $CuMnO_2$ was prepared as below and the overvoltage thereof was calculated. A copper manganese delafossite compound represented by the chemical formula $CuMnO_2$ is referred to as crednerite.

Manganese (III) oxide represented by the chemical formula $Mn_2O_3$ (0.34 grams) and copper(I) oxide represented by the chemical formula $Cu_2O$ (available from Wako Pure Chemical Industries, Ltd., 0.30 grams) were mixed with a sodium hydroxide aqueous solution (40 milliliters) having a concentration of 2 mol / liter to give a mixture. The mixture was poured in a Teflon vessel having a volume of 100 milliliters. Then, the mixture was heated under a temperature of 210 Celsius degrees for sixty hours. In this way, a copper manganese delafossite compound was obtained.

Then, the copper manganese delafossite compound was washed using water for several times. A copper manganese delafossite solid was extracted using a suction filtration device. The solid was dried for 15 hours in a furnace in which a temperature of 80 Celsius degrees was maintained. Finally, the dried copper manganese delafossite solid was ground in an agate mortar. In this way, particles of the copper manganese delafossite compound were obtained.

Similarly to the case of the example 1, an anode containing the copper manganese delafossite compound was prepared and the oxygen generation property thereof was evaluated. The curve (b) in FIG. 4 is an electric current - voltage property of the anode containing the copper manganese delafossite compound according to the comparative example 1. As is clear from FIG. 4, the anode according to the comparative example 1 had an electric potential difference EPD1 of 1.85 volts. Therefore, the anode according to the comparative example 1 had an overvoltage of 0.62 volts.

(Comparative example 2)

A copper iron delafossite compound represented by the chemical formula $CuFeO_2$ was prepared as below and the overvoltage thereof was calculated.

Copper(I) oxide represented by the chemical formula $Cu_2O$ (available from Wako Pure Chemical Industries, Ltd, 3.50 grams) and iron oxide represented by the chemical formula $Fe_2O_3$ (available from Kojundo Chemical Laboratory Co., Ltd., 3.99 grams) were ground and mixed in an agate mortar to give a mixture.

The mixture was supplied to a tableting machine. Then, the mixture was pressed at a pressure of 40 MPa to give a tablet containing copper(I) oxide and iron oxide. The tablet had a diameter of 25 millimeters.

The obtained tablet was put on a board for sintering, and then the board for sintering having the tablet was disposed in a tubular furnace (available from Fukada Electric Factory Corporation, trade name: FKS). After the atomosphere in the furnace was substituted with nitrogen at a flow rate of 200 sccm per hour, the tablet was subjected to sintering at a nitrogen flow rate of 50 sccm under a sintering temperature of 1000 degrees Celsius for 10 hours to give a sintered tablet. The sintered tablet was ground in the agate mortar to give particles of the copper iron delafossite compound represented by the chemical formula $CuFeO_2$.

Similarly to the case of the example 1, an anode containing the copper iron delafossite compound was prepared and the oxygen generation property thereof was evaluated. The curve (c) in FIG. 4 is an electric current - voltage property of the anode containing the copper iron delafossite compound according to the comparative example 2. As is clear from FIG. 4, the anode according to the comparative example 2 had an electric potential difference EPD1 of 1.90 volts. Therefore, the anode according to the comparative example 2 had an overvoltage of 0.67 volts.

(Comparative example 3)

A copper yttrium delafossite compound represented by the chemical formula $CuYO_2$ was prepared as below and the overvoltage thereof was calculated.

Copper(II) oxide represented by the chemical formula CuO (available from Kojundo Chemical Laboratory Co., Ltd., 7.90 grams) and yttrium oxide represented by the chemical formula $Y_2O_3$ (available from Kojundo Chemical Laboratory Co., Ltd., 11.29 grams) were ground and mixed in an agate mortar to give a mixture. Similarly to the case of the comparative example 2, a tablet containing copper(II) oxide and yttrium oxide was obtained.

Then, a sintered tablet was obtained from the tablet using the tubular furnace similarly to the case of the comparative example 2, except that the sintering temeprature was 1,000 degrees Celsius. The sintered tablet was ground in the agate mortar to give particles of the copper yttrium oxide compound represented by the chemical formula $Cu_2Y_2O_5$.

The obtained particles of the copper yttrium oxide compound were supplied to the tableting machine, again. Then, the particles were pressed at a pressure of 40 MPa to give a tablet containing the copper yttrium oxide compound. A sintered tablet was obtained from the tablet using the tubular furnace similarly to the case of the comparative example 2, except that the sintering temeprature was 1,190 degrees Celsius. The sintered tablet was ground in the agate mortar to give particles of the copper yttrium delafossite compound represented by the chemical formula $CuYO_2$.

Similarly to the case of the example 1, an anode containing the copper yttrium delafossite compound was prepared and the oxygen generation property thereof was evaluated. The curve (d) in FIG. 4 is an electric current-voltage property of the anode containing the copper yttrium delafossite compound according to the comparative example 3. As is clear from FIG. 4, the anode according to the comparative example 3 had an electric potential difference EPD1 of 2.00 volts. Therefore, the anode according to the comparative example 3 had an overvoltage of 0.77 volts.

(Comparative example 4)

A copper aluminum delafossite compound represented by the chemical formula $CuAlO_2$ was prepared as below and the overvoltage thereof was calculated.

Copper(II) oxide represented by the chemical formula CuO (available from Kojundo Chemical Laboratory Co., Ltd., 6.56 grams) and aluminum oxide represented by the chemical formula $Al_2O_3$ (available from Kojundo Chemical Laboratory Co., Ltd., 4.20 grams) were ground and mixed in an agate mortar to give a mixture. Similarly to the case of the comparative example 4, a tablet containing copper(II) oxide and aluminum oxide was obtained.

The obtained tablet was put on a board for sintering, and then the board for sintering having the tablet was disposed in a tubular furnace (available from Fukada Electric Factory Corporation, trade name: FKS). After the atomosphere in the furnace was substituted with nitrogen at a flow rate of 200 sccm per hour, the tablet was subjected to sintering at a nitrogen flow rate of 50 sccm under a sintering temperature of 1100 degrees Celsius for 10 hours to give a sintered tablet. The sintered tablet was ground in the agate mortar to give particles of the copper aluminum delafossite compound. Instead of copper(II) oxide represented by the chemical formula CuO, copper(I) oxide represented by the chemical formula $Cu_2O$ (5.84 grams) was used to give similar particles of the copper aluminum delafossite compound.

Similarly to the case of the example 1, an anode containing the copper aluminum delafossite compound was prepared and the oxygen generation property thereof was evaluated. The curve (e) in FIG. 4 is an electric current-voltage property of the anode containing the copper aluminum delafossite compound according to the comparative example 4. As is clear from FIG. 4, the anode according to the comparative example 4 had an electric potential difference EPD1 of 1.92 volts. Therefore, the anode according to the comparative example 4 had an overvoltage of 0.69 volts.

(Comparative example 5)

A copper gallium delafossite compound represented by the chemical formula $CuGaO_2$ was prepared as below and the overvoltage thereof was calculated.

Copper(II) oxide represented by the chemical formula CuO (available from Kojundo Chemical Laboratory Co., Ltd., 7.99 grams) and gallium(III) oxide represented by the chemical formula $Ga_2O_3$ (available from Kojundo Chemical Laboratory Co., Ltd., 9.37 grams) were ground and mixed in an agate mortar to give a mixture. Similarly to the case of the comparative example 2, a tablet containing copper(II) oxide and gallium(III) oxide was obtained. Then, a sintered tablet was obtained from the tablet using the tubular furnace similarly to the case of the comparative example 2, except that the sintering temeprature was 1,000 degrees Celsius. The sintered tablet was ground in the agate mortar to give particles of the copper gallium delafossite compound represented by the chemical formula $CuGaO_2$. Instead of copper(II) oxide represented by the chemical formula $CuO$, copper(I) oxide represented by the chemical formula $Cu_2O$ (7.18 grams) was used to give similar particles of the copper gallium delafossite compound.

Similarly to the case of the example 1, an anode containing the copper gallium delafossite compound was prepared and the oxygen generation property thereof was evaluated. In the comparative example 5, the electric current flowing between the counter electrode and the working electrode was increased with an increase in the number of times of the sweeping using the potentiostat. After the sweeping was repeated 10 times, the electric current was saturated. The curve (f) in FIG. 4 is an electric current - voltage property of the electrode according to the comparative example 5 after the electric current was saturated. After the electric current was saturated, the anode according to the comparative example 5 was observed using an electron microscope. As a result, a part of the copper gallium oxide crystal appeared to be eluted. For this reason, it was believed that the anode according to the comparative example 5 was deteriorated due to the sweeping using the potentiostat.

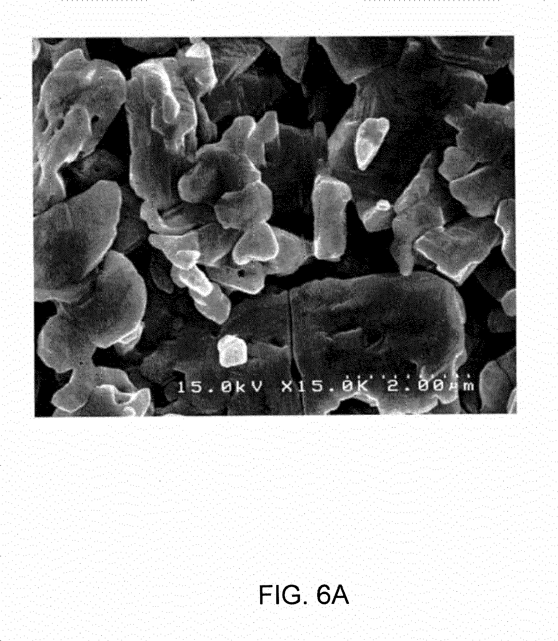

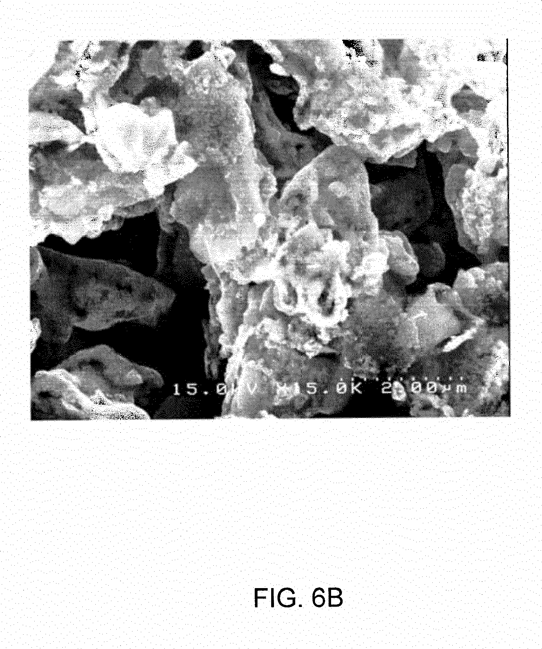

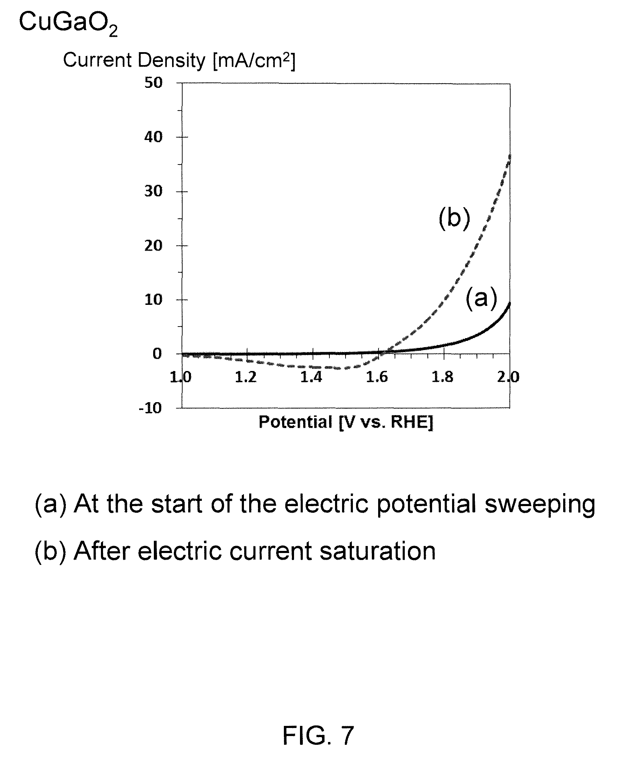

FIG. 6A is a scanning electron microscope image of the anode substrate according to the comparative example 5 before the sweeping of the electric potential was started. The sweeping of the electric potential was repeated 10 times using the potentiostat. FIG. 6B is a scanning electron microscope image of the anode substrate according to the comparative example 5 after the electric current was saturated by repeating the sweeping of the electric potential 10 times. FIG. 7 is a graph showing an electric current - voltage property in the comparative example 5 before and after the sweeping of the electric potential was repeated 10 times. As is understood from FIG. 6A, FIG. 6B, and FIG. 7, the anode substrate was deteriorated. Furthermore, as seen in FIG. 7, a cathode current due to the redeposition was observed in the comparative example 5.

(Reference example 1)

An anode supporting cobalt oxide represented by the chemical formula $Co_3O_4$ was prepared as below and the overvoltage thereof was calculated.

Cobalt oxide represented by the chemical formula $Co_3O_4$ (available from Furuuchi Chemical Corporation, 40 milligrams) was dispersed in pure water (2 milliliters) to prepare a slurry. Similarly to the case of the example 1, an anode was prepared using the slurry and the oxygen generation property thereof was evaluated. The curve (g) in FIG. 4 is an electric current - voltage property of the anode according to the reference example 1. The anode according to the reference example 1 had an electric potential difference EPD1 of 1.60 volts. Therefore, the anode according to the reference example 1 had an overvoltage of 0.37 volts.

(Reference example 2)

In the reference example 2, the HPG substrate itself used in the example 1 was used as an anode. In other words, the anode according to the reference example 2 was composed only of the HPG substrate used in the example 1. After the HPG substrate was washed similarly to the case of the example 1, the oxygen generation property thereof was evaluated. The anode according to the reference example 2 had an electric potential difference EPD1 of 2.00 volts. Therefore, the anode according to the reference example 2 had an overvoltage of 0.77 volts.

The following Table 1 shows the materials, the electric potential differences EPD1, and the overvoltage of the anodes according to the example 1, the comparative examples 1 - 5, and the reference examples 1 - 2.

[Table 1]

| | Catalyst material | Electric potential difference EPD1 (vs. RHE) | Overvoltage (vs. RHE) |
|---|---|---|---|
| Example 1 | $CuCoO_2$ | 1.63 volts | 0.40 volts |
| Comparative example 1 | $CuMnO_2$ | 1.85 volts | 0.62 volts |
| Comparative example 2 | $CuFeO_2$ | 1.90 volts | 0.67 volts |
| Comparative example 3 | $CuYO_2$ | 2.00 volts | 0.77 volts |
| Comparative example 4 | $CuAlO_2$ | 1.92 volts | 0.69 volts |
| Comparative example 5 | $CuGaO_2$ | (unmeasurable) | - |
| Reference example 1 | $Co_3O_4$ | 1.60 volts | 0.37 volts |
| Reference example 2 | (HPG substrate) | 2.00 volts | 0.77 volts |

As is clear from Table 1, only the copper cobalt delafossite compound according to the example 1 has a low overvoltage, except for the reference example 1. This overvoltage was almost the same as the overvoltage of $Co_3O_4$. For this reason, a water electrolysis device comprising the anode formed of the copper cobalt delafossite compound according to the example 1 has the substantially same energy efficiency as a water electrolysis device comprising the anode formed of cobalt oxide $Co_3O_4$ which has high energy efficiency.

INDUSTRIAL APPLICABILITY

The present invention provides a method for efficiently generating oxygen by electrolyzing water using a copper delafossite compound as an anode.

REFERENTIAL SIGNS LIST

    11: container
    12: anode
    13: cathode
    14: power supply
    15: electrolyte aqueous solution
    16: diaphragm
    17: electrolyte film

**Claims**

1.   A method for generating oxygen, the method comprising:

        (a) preparing a water electrolysis device comprising:

            a container;
            a power supply;
            an anode;
            a cathode; and
            an electrolyte aqueous solution, wherein
            the anode and the cathode are in contact with the electrolyte aqueous solution,
            the anode includes a copper cobalt delafossite compound represented by a chemical formula $CuCoO_2$, and
            the copper cobalt delafossite compound is in contact with the electrolyte aqueous solution, and

        (b) applying an electric potential difference between the cathode and the anode using the power supply to generate oxygen on the anode due to electrolysis of water which occurs on the copper cobalt delafossite compound.

2.   The method according to Claim 1, wherein
    the container further comprises a diaphragm; and
    the diaphragm divides the inside of the container into a first chamber having the anode and a second chamber having the cathode.

3.   A water electrolysis device for generating oxygen, comprising:

        a container;
        a power supply;
        an anode; and
        a cathode, wherein
        an electrolyte aqueous solution is stored in the container;
        the anode and the cathode are electrically connected with the power supply;
        the anode and the cathode are in contact with the electrolyte aqueous solution;
        the anode has a copper cobalt delafossite compound represented by a chemical formula $CuCoO_2$; and

the copper cobalt delafossite compound is in contact with the electrolyte aqueous solution.

4. The water electrolysis device for generating oxygen according to Claim 3, wherein
the container further comprises a diaphragm; and
the diaphragm divides the inside of the container into a first chamber having the anode and a second chamber having the cathode.

5. An anode for generating oxygen due to electrolysis of water, wherein
the anode includes a copper cobalt delafossite compound represented by a chemical formula $CuCoO_2$.

FIG. 1

FIG. 2

FIG. 3

FIG. 4

FIG. 5

FIG. 6A

FIG. 6B

CuGaO$_2$

(a) At the start of the electric potential sweeping

(b) After electric current saturation

FIG. 7

**EUROPEAN SEARCH REPORT**

Application Number

EP 14 19 2940

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | HINOGAMI REIKO ET AL: "Active copper delafossite anode for oxygen evolution reaction", ELECTROCHEMISTRY COMMUNICATIONS, vol. 35, 29 August 2013 (2013-08-29), pages 142-145, XP028740810, ISSN: 1388-2481, DOI: 10.1016/J.ELECOM.2013.08.018 * paragraphs [0001], [0004]; figures 2,3; table 1 * | 1-5 | INV. C01B13/02 C25B1/04 C25B11/04 |
| Y | MARQUARDT M A ET AL: "Crystal chemistry and electrical properties of the delafossite structure", THIN SOLID FILMS, ELSEVIER-SEQUOIA S.A. LAUSANNE, CH, vol. 496, no. 1, 1 February 2006 (2006-02-01), pages 146-156, XP025006744, ISSN: 0040-6090, DOI: 10.1016/J.TSF.2005.08.316 [retrieved on 2006-02-01] * paragraph [0006]; table 5 * | 1-5 | |
| Y,D | GB 1 400 948 A (PPG INDUSTRIES INC) 16 July 1975 (1975-07-16) * page 1, line 10 - line 30 * * page 6, line 50 - line 70 * | 1-5 | TECHNICAL FIELDS SEARCHED (IPC) C01B C25B |

-/--

The present search report has been drawn up for all claims

| Place of search | Date of completion of the search | Examiner |
|---|---|---|
| Munich | 5 May 2015 | Cristescu, Ioana |

Europäisches
Patentamt

European
Patent Office

Office européen
des brevets

# EUROPEAN SEARCH REPORT

Application Number

EP 14 19 2940

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | BEEKMAN M ET AL: "Characterization of delafossite-type CuCoO2 prepared by ion exchange", JOURNAL OF ALLOYS AND COMPOUNDS, ELSEVIER SEQUOIA, LAUSANNE, CH, vol. 489, no. 2, 21 January 2010 (2010-01-21), pages 336-338, XP026791055, ISSN: 0925-8388 [retrieved on 2009-09-30] * paragraph [0003]; figure 4 * | 1-5 | |
| A | MATHIEU DE KONINCK ET AL: "Cu[sub x]Co[sub 3-x]O[sub 4] Used as Bifunctional Electrocatalyst", JOURNAL OF THE ELECTROCHEMICAL SOCIETY, vol. 153, no. 11, 1 January 2006 (2006-01-01), page A2103, XP055187280, ISSN: 0013-4651, DOI: 10.1149/1.2338631 * the whole document * | 1-5 | |

TECHNICAL FIELDS
SEARCHED (IPC)

The present search report has been drawn up for all claims

| Place of search | Date of completion of the search | Examiner |
|---|---|---|
| Munich | 5 May 2015 | Cristescu, Ioana |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.** EP 14 19 2940

This annex lists the patent family members relating to the patent documents cited in the above-mentioned European search report.
The members are as contained in the European Patent Office EDP file on
The European Patent Office is in no way liable for these particulars which are merely given for the purpose of information.

05-05-2015

| Patent document cited in search report | Publication date | Patent family member(s) | Publication date |
|---|---|---|---|
| GB 1400948 A | 16-07-1975 | NONE | |

EPO FORM P0459

For more details about this annex : see Official Journal of the European Patent Office, No. 12/82

**EP 2 894 125 A1**

**Patent documents cited in the description**

- GB 1400948 B

**Non-patent literature cited in the description**

- *Acta Crystallographica,* 1956, vol. 9, 200